**Europäisches Patentamt**

**European Patent Office**

**Office européen des brevets**

(19)

(11) Publication number : **0 376 558 B1**

(12) # EUROPEAN PATENT SPECIFICATION

(45) Date of publication of patent specification :
**31.03.93 Bulletin 93/13**

(51) Int. Cl.⁵ : **B60C 1/00,** C08L 23/22,
C08L 23/28, C08L 23/08

(21) Application number : **89313112.8**

(22) Date of filing : **14.12.89**

(54) **Air impermeable containers.**

(30) Priority : **22.12.88 GB 8829973**

(43) Date of publication of application :
**04.07.90 Bulletin 90/27**

(45) Publication of the grant of the patent :
**31.03.93 Bulletin 93/13**

(84) Designated Contracting States :
**BE DE ES FR GB IT NL**

(56) References cited :
**EP-A- 0 172 645**
**EP-A- 0 287 282**

(73) Proprietor : **EXXON CHEMICAL PATENTS INC.**
**200 Park Avenue**
**Florham Park New Jersey 07932 (US)**

(72) Inventor : **Kay, Peter James**
**Kouterstraat 96**
**B-1900 Overijse (BE)**
Inventor : **Bonte, Yves**
**Tervuursevest 254**
**B-3000 Leuven (BE)**
Inventor : **Ouhadi, Trazollah**
**Quai Gloesener 5**
**B-4000 Liege (BE)**

(74) Representative : **Dew, Melvyn John et al**
**Exxon Chemical Limited Exxon Chemical**
**Technology Centre P.O. Box 1**
**Abingdon Oxfordshire, OX13 6BB (GB)**

EP 0 376 558 B1

Jouve, 18, rue Saint-Denis, 75001 PARIS

## Description

This invention relates to containers for air which have walls formed from a thermoplastic elastomeric polymer composition with reduced air permeability, particularly but not exclusively when in the form of vehicle, especially bicycle, inner tubes.

Vehicle, such as bicycle innertubes are conventionally produced from rubber compounds, which may be based on butyl rubber, by a technique which comprises producing the rubber compound and then extruding it into a straight tubular shape. The tube is cut to length and then has to undergo a splicing technique at its ends to form the tube into a hollow ring. In order to provide rubbery properties, such ring, after splicing, then has to be crosslinked to convert the compound to vulcanized and hence air impermeable form. Typically after splicing into the form of a ring, the ring has to be placed into a circular mould which is then heated in order to provide uniform crosslinking throughout the finished article. This technique includes several process steps and hence is time, manpower and energy expensive. The splicing may be carried out by pressing freshly cut surfaces together in a splicing press.

The principal disadvantage of the conventional technique is that in order to obtain good air impermeability and to obtain good physical properties, obviously a requirement for bicycle innertubes, it is necessary for the rubber to be cured; however curing generally does not take place before the ring is formed, since the cured rubber does not exhibit such good adhesion performance. There is a desideratum, therefore, for a formulation which will readily permit production of vehicle innertubes by methods which include a splicing step, but which do not include a time consuming vulcanization stage.

In recent years there has been a significant commercial interest in polymer blends which have a combination of both elastic and thermoplastic properties. They exhibit some of the properties of a cured elastomer as well as the reprocessability of thermoplastic resins.

The earliest work in the curing of thermoplastic elastomers was by Gessler and Haslett (US3037954) who taught the concept of dynamic vulcanization wherein a vulcanizable elastomer is dispersed in a resinous thermoplastic polymer and the elastomer is cured while continuously mixing and shearing the polymer blend. The result is a micro gel dispersion of cured rubber in an uncured, continuous matrix of resinous thermoplastic polymer.

Gessler discloses compositions comprising 50 to 95 parts of polypropylene and 5 to 50 parts of vulcanizable rubbery copolymers such as butyl rubber, chlorinated butyl rubber, polybutadiene, polychloroprene and polyisobutene.

US4130535 (Monsanto) discloses thermoplastic elastomeric compositions wherein the rubber component is an ethylene propylene copolymer (EPM) or terpolymer (EPDM), and the preferred thermoplastic crystalline polyolefin resins are polypropylene and polyethylene. The rubber is dynamically cured to a fully cured state, in a proportion of about 25 to 75 wt % rubber.

US4130534 (Monsanto) discloses similar blends produced by the dynamic vulcanization technique, but wherein the rubber is a butyl rubber or a halogenated butyl rubber, and this is present in an amount of from 55 to 80 wt % of the blend. Again, the preferred crystalline polyolefin resin component is polypropylene or polyethylene.

The prior art mentioned above teaches that the thermoplastic elastomeric compositions which they define are useful for the production of articles by extrusion, injection moulding, calendering, vacuum forming and hot stamping techniques; in particular for producing articles such as tyres, hoses, belts, gaskets, mouldings and moulding parts. A valuable characteristic of the thermoplastic elastomeric blends is that they are reprocessable by virtue of their thermoplastics components. The rubber is generally present in the form of fully cured small particles of the order of 60 μm and below, preferably 1 to 5 μm diameter.

It has been recognised that the above mentioned thermoplastic elastomeric systems wherein the rubber is fully cured have the disadvantage that, as a result of poor flow characteristics, certain components made therefrom exhibit flow line imperfections, and moreover have a high Shore A hardness. Other thermoplastic elastomeric blends are known in which the rubber component is uncured or partially cured, and these exhibit low tensile strength and high compression set.

It has also been recognised that thermoplastic blends having good physical strength characteristics coupled with excellent processability, low hardness and low compression set can be prepared from a blend of a thermo plastic polyolefin resin and two rubber components, only one of which is fully cured by the dynamic vulcanization technique. Blends of this nature are disclosed in EP-A-0171926 (Exxon). The blends disclosed in EP-A-0171926 are stated to be useful as molded and extruded articles such as gasketing materials, boot seals, tubing and housing.

Compositions as mentioned above are known to have good reprocessability characteristics, and the applicants have considered similar compositions containing butyl rubber or halogenated butyl rubber components in the production of air impermeable containers suitable for bicycle inner tubes. It has been recognised that a required characteristic of inner tubes is that they must be air impermeable whilst at the same time reprocessable (to economise on wastage in the production process) and soft enough to be flexible at low ambient temperatures (thus avoiding cracking and leakage). A container which has been developed by the applicants and is suitable for retaining air at superatmospheric pressure, has walls of a thermoplastic elastomeric polymer composition with reduced air permeability, and is characterized in that the polymer composition comprises from 10 to 60 wt % of a crystalline polyolefin component (a) and from 40 to 90 wt % of a vulcanized butyl or halogenated butyl rubber component (b), based on the total of (a) + (b), and (on the basis of 100 wt % of (a) + (b)) a compatibilising amount, preferably from 10 to 150 %, more preferably from 10 to 100 wt % of an unvulcanized monoolefin copolymer rubber component (c), component (b) being the form of small particles of vulcanized rubber dispersed throughout component (a).

The unvulcanized rubber component (c) of the polymer compositions used in these developmental containers is a monoolefin copolymer rubber, being a polymer of monomers comprising ethylene or propylene and at least one other alpha olefin of the formula $CH_2=CHR$ in which R is alkyl of 1 to 12 carbon atoms, and from none to a minor proportion of at least one copolymerizable polyene, preferably diene.

An example of such rubbers is EPDM, which term is used in the sense of its ASTM designation .

Suitable crystalline polyolefin components (a) which may be employed in the compositions used to make the developmental containers of the applicants comprise crystalline, high molecular weight solid products from the polymerization of one or more monoolefins by high pressure or low pressure processes. Examples of such resins are the isotactic and syndiotactic mono olefin copolymer resins, representative members of which are commercially available. Examples of satisfactory olefins are ethylene, propylene, 1-butene, 1-pentene, 1-hexene, 2-methyl-1-propene, 3-methyl-1-pentene, 4-methyl-1-pentene, 5-methyl-1-hexene and mixtures thereof. The commercially available thermoplastic polyolefin resins which are most preferred by the applicants in these developmental containers are polyethylene or polypropylene, especially polypropylene.

The compositions used to form the walls of the developmental container are required to contain components (a) + (b) in a ratio of from 10/90 to 60/40 by weight. The uncured rubber component (c) is preferably present in a proportion of from 10 to 150 wt %, more preferably from 10 to 100 wt %, based on the total of (a) + (b). Preferably the butyl or halogenated butyl rubber component (b) is present in relatively high proportions, for example from 60 to 90 wt % based on the total of (a) + (b). The proportion of uncured rubber component (c) is most preferably in the range from 20 to 50 wt %, but it is said that the precise proportions can be adjusted by means of simple experiments known to those skilled in the art, given an understanding of the end use of the compositions, which requires the container walls to be substantially air impermeable, and elastomeric, and thermoplastic, and to have sufficient strength to retain air under high pressures, and to be spliceable in a tube production process. With regard to the parameters mentioned above, it is preferred according to this prior art that component (a) should be polypropylene, (b) is preferably chlorinated butyl rubber, and (c) is preferably EPDM ; ideally the composition comprises all three of these components.

In these developmental containers the applicants have sought to overcome the practical problems of compositions disclosed in the other prior art documents mentioned above, in particular the relatively poor low temperature flexibility of the compositions, by incorporating component (c). Thus the applicants have found that the presence of the further component (c), preferably EPDM, is necessary in order to confer desirable elastomeric properties on the tube composition; the applicants believe that component (c) confers softness, improved tensile strength, better elongation and easier processing characteristics on the composition by acting as a compatibiliser for components (a) and (b). It has now been discovered, however, that the presence of EPDM in such blends, whilst perhaps contributing to the softness, ie low temperature flexibility, of the blends, generally has a deleterious effect on the air impermeability of the compositions. The applicants in the present invention, have therefore sought to develop blends which are more ideally suited for air containment by virtue of having good air impermeability, low hardness (ie good low temperature flexibility) and satisfactory toughness, as well as being economical in eg the tube production process.

Further prior art known to the authors is EP-A-172645 (Exxon) which discloses thermoplastic elastomeric compositions obtained by dynamically vulcanising (i.e. vulcanising while mixing and shearing) a rubber in the presence of an ethylene copolymer resin or a mixture of at least 25 wt % of that resin and up to 75 wt % of another resin with a melting point below 126°C. Preferably the rubber is chlorinated or brominated butyl rubber and the copolymer resin is an ethylene/vinyl acetate (EVA) copolymer containing 2-30 (especially 9-27) wt % vinyl acetate. The other resin is low-density or linear low-density polyethylene or polybutylene. The compositions of this prior art are said to be useful in making heat-shrinkable films, tubing and tapes. They combine good heat-shrink and elasticity properties with the reprocessibility of thermoplastic resins. This publication contains no suggestion to use such blends in systems designed for high pressure air impermeability.

Indeed the blends of this publication are directed to pharmaceutical type applications which make use of the heat shrinkable properties of the blends. Nowhere is there any recognition or suggestion that the blend compositions may have superior air impermeability characteristics, and thus be useful for vehicle type inner tubes. Although use of the blends as tubes is mentioned (page 20, line 26) this is in the context of the heat shrink application.

Other uses specifically mentioned (claim 26) are as a pharmaceutical enclosure, intravenous solution bag port cap, stopper, syringe, jar seal and food storage bin. That the blends are not proposed for use in containers for high pressure gases such as air may be deduced from the fact that this publication makes no mention of air impermeability properties, and that it proposes many rubber types other than butyl rubber, as being present in the blends, for example EPDM, polyisoprene, polychloroprene, styrene-butadiene rubber, nitrile rubbers and chlorosulfonated polyethylene. Many of these, although suitable for the blends of EP-A-172645, do not have the properties which would make them suitable for the use which is the subject of the present application. The data provided in EP-A-172645 relate to blow film of thickness 4 mil (0.004 inch, 0.0102 cm) which clearly could not be intended for e.g. bicycle inner tube use.

Also known is GB-A-1164528 (Polymer Corporation Limited) which teaches homogeneous blends of (a) 70 to 90 parts by weight of a rubbery copolymer such as butyl rubber, and (b) 10 to 30 parts by weight of an ethylene vinyl acetate copolymer. Such blends also contain blowing and vulcanizing agents, and in use the blends are blown and vulcanized to form a thermoset microcellular material suitable for use as shoe soles. This disclosure is not concerned with dynamic vulcanization; both polymer components are cured in the final product; and the blend is homogeneous ie does not constitute a dispersion of cured rubber particles in an EVA matrix. Furthermore there is no suggestion that the vulcanized microcellular composition may be useful as a container for air at superatmospheric pressure.

US-A-3326833 discloses compositions of a copolymer of ethylene with an alkyl ester of an alpha-beta-monoethylenically unsaturated monocarboxylic acid, e.g., ethylene-ethylacrylate copolymer, and a halogenated olefin polymer. The rubber can be halogenated butyl rubber or chlorinated polyethylene. The compositions are either uncured and thermoplastic or peroxide cross-linked to form insoluble non-thermoplastic resins.

WO 87/07625 (Exxon) teaches dynamically vulcanized blends of plastics and rubber components which employ the concept that a rubber which is not normally compatible with a resin polymer can be made so by blending it with a minor amount of a second rubber which is compatible with the resin. More particularly there are disclosed blends of ethylene vinyl acetate copolymer resin in which are dispersed as cured rubbers, halogenated butyl rubber and polychloroprene. The blends are said to be useful in various moulded and extruded articles, including seals, gaskets, clamped hose etc. However there is no suggestion that the blends may be useful or used for containing air at high pressure, and indeed there are no permeability data contained in the disclosure. The presence of polychloroprene in the blend would suggest to the reader that such blends are not useful for tyre inner tube applications, and the mention of use of the blends in clamped hoses certainly does not imply such use.

According to the present invention there is provided a container for superatmospheric pressure air having a wall of a thermoplastic elastomeric polymer composition with reduced air permeability, characterized in that the polymer composition comprises from 10 to 80 wt % of a semi-crystalline copolymer (A), having a melt index less than 100 g/10 min., of (A1) ethylene and (A2) 6-40 wt % an alpha-beta unsaturated carboxyl group - or ether group - containing comonomer, and from 20 to 90 wt % of a vulcanized butyl or halogenated butyl rubber (B), component (B) being present in the form of small particles of vulcanised rubber dispersed throughout a continuous phase of component (A).

Butyl rubber is a copolymer of an isoolefin and conjugated diolefin. The useful copolymers comprise a major proportion of isoolefin and a minor amount, preferably not more than 30 wt % , of a conjugated diolefin.

The preferred copolymers comprise 85 to 99.5 wt % of a C4 to C7 isoolefin such as isobutylene, and 15 to 0.5 wt % of a diolefin of 4 to 14 carbon atoms. The term halogenated butyl rubber as used herein means copolymers of the type mentioned above which are halogenated with from 0.1 to 10, preferably 0.5 to 3.0 wt % chlorine or bromine.

In the compositions employed as wall components, component (B) is present in the form of small particles, preferably from 1 to 60 $\mu$m diameter, more preferably from 1 to 5 $\mu$m diameter, dispersed throughout a continuous phase which comprises the plastics component (A). The butyl or halogenated butyl rubber component is preferably fully cured, and the required dispersion of fully cured particles can optimally be obtained by the well known dynamic vulcanization technique. The butyl or halobutyl rubber component (B) preferably has a number average molecular weight of from 25.000 to 500.000, more preferably from 80.000 to 300.000 and most preferably from 100.000 to 250.000. In general higher molecular weight rubbers (B) yield containers according to the invention having improved tensile strength properties.

Dynamic vulcanisation may be considered as a vulcanization process for rubber-containing thermoplastic compositions wherein the rubber is vulcanized under conditions of high shear. As a result the rubber is simultaneously crosslinked and dispersed as fine particles of a micro gel within a polymer matrix. Dynamic vulcanization may be effected by mixing the components at a temperature which is at or above the curing temperature of rubber (B) in equipment such as rolling mills, Banbury mixers, continuous mixers, kneaders or mixing extruders. The characteristic of such dynamically cured compositions is that, notwithstanding the fact that the rubber component is fully cured, the compositions can be processed and reprocessed by conventional rubber processing techniques such as extrusion. Scrap or flashing can be salvaged and reprocessed.

In preparing the compositions used as walls in containers of the instant invention, it is preferred that component (A) is blended with the rubber component (B) under conditions such that good mixing is obtained before the curative is added to the system.

Of course the curative should be one which is effective on component (B) under the applied conditions but not on component (A). Typically for the halogenated butyl rubber component, the curative would be zinc oxide, which may be used alone, or in the presence of accelerators such as dithiocarbamates, thiurams, diamines and thioureas.

In the preferred practice of the dynamic vulcanization technique copolymer (A) and other components are mixed together at a temperature sufficient to soften the copolymer or, more commonly, at a temperature above its melting point. After the copolymer (A) and rubber (B) are intimately mixed, the curative is added and heating and masticating at vulcanization temperature is continued for a time to complete vulcanization, usually from 0.5 to 10 minutes. Typically the vulcanization temperatures would be from the softening point of component (A) (40 to 90 °C (ASTM D 1525) in the case of ethylene vinyl acetate, depending on vinyl acetate content) to 210°C; more typically the temperature range is 150°C to 190°C.

It is preferred that the mixing process be continued until vulcanization is completed. The extent of vulcanization may be determined by techniques commonly employed in the art, such as gel content measurements.

It will be recognized that the compositions may contain other additives such as fillers, anti-oxidants, stabilizers, rubber processing oils, lubricants, anti-blocking agents, pigments and coupling agents. The amount of these can be adjusted in dependence on the end use requirements of the composition, although with regard to oil content, reference should be made to the following discussion.

Component (A) according to the invention is a copolymer of ethylene with a comonomer which is an alpha-beta unsaturated carboxyl group-containing compound or an alpha-beta unsaturated ether group-containing compound. A wide variety of such comonomers may be employed in production of the copolymer, but the especially preferred comonomer (A2) is a vinyl ester, particularly vinyl acetate. The remaining description of this invention is made in terms of component (A) being ethylene vinyl acetate copolymer (EVA), but this is for convenience of the reader only : many other components (A) may be used in accordance with the invention and reference herein to EVA is to be taken in context as applying to all such components (A). The term semi-crystalline as employed herein with regard to component (A) is one which is well understood in the polymer art.

For example comonomer (A2) may be an acrylate ester such as methyl acrylate, methyl methacrylate, butyl acrylate, butyl methacrylate, ethyl acrylate or ethyl methacrylate; or an acrylic acid compound such as methyl acrylic acid, butyl acrylic acid, ethyl acrylic acid; or a methacrylic acid compound such as methyl methacrylic acid, butyl methacrylic acid, ethyl methacrylic acid; or a vinyl ether such as methyl vinyl ether.

A notable feature of the containers of the invention is the unconventional manner in which the hardness of the blends is reduced, without substantial detrimental effect on properties such as air permeability. The conventional way in which those skilled in the rubber and plastics compounding art would have sought to reduce the hardness of a compound, would be by incorporation of an oil or reducing the amount of filler present, ie by increasing the oil/filler ratio. The approach chosen in accordance with the present invention is to replace eg the crystalline polyolefin content of blends such as those described in the above-mentioned prior art, by a semi-crystalline copolymer such as ethylene vinyl acetate. This has the advantage that hardness is decreased without substantial detrimental effect on air permeability. It has been found that incorporation of increased amounts of oil will certainly reduce hardness of the composition, but will also result in a much increased air permeability. In some embodiments of the invention, therefore, oil is absent.

A further advantage of employing semi-crystalline copolymers such as ethylene vinyl acetate as the plastics component of the container wall blends of the invention is that the properties of the composition can be controlled by adjusting the comonomer ratios in the copolymer. In general, the greater is the comonomer eg vinylacetate (VA) content of the copolymer component (A), the lower is the softening point of the polymer, but the higher is its permeability to air. There is thus a need to compromise between these two physical properties, which is readily achieved by comonomer eg VA content control.

For example when the containers of the invention are tyre inner tubes intended to be used in hot climates, the comonomer (VA) content of component (A) is preferably relatively low since the in use temperature will be relatively high. In contrast, containers intended for use as tyre inner tubes in cold climates are preferably more flexible (softer) since this reduces the danger of embrittlement (hence cracking) in use. In this case the comonomer (VA) content of (A) is at the high end of the preferred ranges, even though this may not give optimised air impermeability. In any case, both in hot and cold climates it is necessary for the compositions to be sufficiently soft to permit installation within the tyre without cracking or splitting.

In a preferred embodiment the containers of the invention are formed from a composition having a Shore A hardness of from 50 to 70, more preferably from 55 or above to 65 (ASTM-D 2240 at 5 sec.)

As mentioned, use of semi-crystalline copolymer such as EVA means that (compared with blends containing crystalline polyolefin) the compositions have a lower softening point and a semi-crystalline, hence softer, matrix which is more flexible, and generally easier to splice and repair. Further the polarity of the copolymer leads to better adhesion than crystalline polyolefin based compositions.

Component (A) has 6 to 40 wt % comonomer, eg VA, content, preferably from 10 to 30 wt %, and more preferably from 15 to 25 wt %. For example the comonomer (eg VA) content may be 20 %. The actual comonomer (eg VA) content can be adjusted to suit conditions of use for the containers of the invention eg bicycle inner tubes, as discussed hereinbefore. Increasing VA content leads to improved low temperature flexibility, improved toughness (resistance to puncture) and improved adhesion (which is especially useful in bicycle inner tubes where a valve assembly may have to be adhered to the tube body, or indeed where the tube is formed by an adhesive splicing technique).

The comonomer (eg VA) content of the copolymer (A) is a reflection of crystallinity (lower comonomer (VA) content copolymers have higher crystallinity) and it is in fact crystallinity which results in modified softening point and hardness properties. The Vicat softening temperature is related to crystallinity, and it is preferred that the components (A), preferably EVA's, used in the invention have a Vicat temperature (ASTM D 1525) below 80°C, more preferably below 45°C.

The molecular weight of component (A) is also important in terms of performance of the containers of the invention. If MW is too low, then the containers have poor physical properties such as tensile strength at break, elongation at break etc. The melt index of the component (A) eg EVA, is less than 100 g/10 min, preferably less than 60 g/10 min (ASTM D 1238).

The rubber content of the compositions used in containers of the invention has an effect not only on air permeability, but also on hardness and processability. Based on the total of components (A) and (B), the proportion of (B) is from 20-90, more preferably 40-80, even more preferably 45-75, yet more preferably 50-70 and most preferably 55-65 weight %. It is particularly preferred that the composition rubber content is 60 wt %. If the rubber content is too low, then the composition tends to be too hard and to have too high an air permeability for use as eg bicycle inner tubes; and if too high then processability suffers. The actual value for the rubber content is therefore selected in dependence on the particular use conditions envisaged for the containers of the invention, and on the other components present in the composition.

As mentioned hereinbefore, the compositions used in accordance with the invention permit much lower oil (plasticizer) contents than conventional blends would require with crystalline polyolefins to achieve the same (low) hardness. However it is still possible for the composition to contain oil and/or filler. To avoid too great an effect on permeability, it is preferred that on the basis of 100 parts by weight (pbw) of (A) plus (B), the compositions used for containers of the invention contain no more than 50 pbw of oil; more usually the amount of oil present (if any) is in the range 10-35 pbw, preferably the lower the better, eg below 15 pbw, for good air impermeability.

Again, the amount of oil (plasticizer) needed will depend inter alia on the comonomer (eg VA) content of the copolymer component (A).

The compositions produced by the techniques discussed hereinbefore are used to form the walls of containers for containing air under pressure. Preferably such container walls have an air permeability coefficient (measured at 21°C in accordance with ASTM method D 1434 Appendix A-1 on an Aminco-Goodrich apparatus) of less than 3 X $10^{-8}$, more preferably less than 2 X $10^{-8}$ and most preferably no more than about 1 X 10 $^{-8}$, in units of $Q = cm^3.cm.cm^{-2}.sec^{-1}.atm^{-1}$.

It has been found that the compositions are ideally suited for production of air containers which comprise vehicle wheel innertubes, especially bicycle wheel innertubes. It will be recognized that such products are required to contain air at high pressures, are subjected to frequent physical shock in use, are required to be substantially impermeable to air under pressure, and should not be susceptible to low temperature cracking.

According to a further aspect of the present invention there is provided a method of producing a vehicle, especially bicycle, innertube which comprises extruding a thermoplastic elastomeric polymer composition comprising components (A) and (B) as defined above, in the proportions as defined above, into an elongate tube form of substantially uniform cross section having opposite ends in the longitudinal direction, bringing the ends together and splicing same to form a continuous hollow ring suitable for containing air under pressure. Such ring will of course be provided with valve means for permitting ingress of and retaining air under pressure;

the tube may be for example circular or oval in cross-section, which cross section preferably is of the same dimension through the entire longitudinal axis of the tube.

The splicing can be carried out by applied adhesives, or by heat welding , or by a cold fusion technique such as ultrasonic welding. Where adhesive methods are used, the presence of the polar semicrystalline EVA facilitates that method, and of course where fusion methods are employed the thermoplastic nature of the EVA is important.

One particular value of the containers and method defined herein, using the defined compositions, is that splicing can be performed through melting of the thermoplastic phase, thus greatly simplifying the tube production process. Moreover, since the rubber is already in cured form when the composition is converted into the container shape (tube shape) there is no requirement for production processes which are expensive in terms of energy consumption and the requirement for costly molds. Compounds containing butyl rubber have hitherto been used for producing bicycle inner tubes of improved permeability compared with components containing natural rubber, but they must still be crosslinked by the mold technique. The use according to the invention of butyl or halogenated butyl rubber containing compositions which are dynamically vulcanized during mixing offers a product which gives permeability remarkably similar to straight butyl rubber compounds, but such products can be directly extruded and spliced without the need for molding or curing in situ. Since the material is thermoplastic, any reject tubes can be ground up and recycled, thereby eliminating waste material.

The following Examples illustrate the invention.

## EXAMPLE 1

Composition 1 as set out in Table 1 was prepared by the dynamic vulcanisation method in an industrial 30 l Banbury type mixer. Initially the polymer components and all additives other than curatives and oil were introduced in the mixer and mixing was carried out for 100 sec, at which time the mixture was at 160°C. At this stage the curative package was introduced and mixing continued for a further 40 sec, where the mixture was at 180°C. At that time half of the oil content of the formulation and mixing was continued until a total of 275 sec had elapsed, when the temperature of the mixture was 190°C. then the remainder of the oil was added and mixing was continued until a total of 390 sec had elapsed, when the composition comprising small particles of fully cured chlorobutyl rubber dispersed in an EVA matrix, with oil and filler homogeneously distributed therein, was dumped. The composition comprised 37 wt % rubber and 63 wt % EVA, with 47 wt % filler and 27 wt % oil based on rubber + EVA.

The composition thus produced was formed into a tube of diameter 15 mm and thickness 1 mm by extrusion on a Schwabenthan extruder with screw diameter 30 mm and length/diameter ratio 25, operated at the following conditions :

| | |
|---|---|
| Back pressure | = 1900 MPa |
| Current | = 5.3 Amps |
| Screw speed | = 60 rpm |
| Torque | = 225.6 Newton meter (Nm) [23 Kpm] |
| Front pressure | = 31.3 mega Pascal (MPa) [313 bar] |

Temperature Setting

| | |
|---|---|
| Zone 1 | = 140°C |
| Zone 2 | = 150°C |
| Zone 3 | = 160°C |
| Zone 4 | = 170°C |
| Die | = 160°C |

Seal temperature

| | |
|---|---|
| Zone 1 | = 140°C |
| Zone 2 | = 150°C |
| Zone 3 | = 160°C |
| Zone 4 | = 175°C |
| Die | = 165°C |

Melt temperature = 175°C
Output = 72.8 g/min

Samples of the composition were also formed into a plate of length 115 mm and width 85 mm and thickness 2 mm by injection molding at 200 °C on a Daniels injection machine. The resulting plates were subjected to the following tests as representative of performance of the tube formed from the corresponding composition :

(1) Hardness (Shore 73 A) by ASTM D 2240 with values measured instantaneously, after 5 seconds and after 30 seconds.

(2) 100 % modulus by ASTM D 412

(3) 300 % modulus by ASTM D 412

(4) Tensile strength by ASTM D 412

(5) Elongation by ASTM D 412 (measurements were made in both the longitudinal and transverse directions of the test plate, and the values recorded are the averages of these measurements).

(6) Compression set by ASTM D 395 - 22 h at room temperature (RT) and at 70°C

(7) Tear strength by ASTM D 624 - die C, as average of the longitudinal and transverse plate direction measurements.

(8) Air permeability coefficient Q by ASTM D 1434 and expressed in units of $cm^3.cm.cm^{-2}.sec^{-1}.atm^{-1}$.

The results of these tests are reported in Table 1.

## EXAMPLE 2

Composition 2 as set out in Table 1 was prepared by dynamic vulcanisation in a 1.3 l POMINI laboratory mixer operated at a rotor speed of 155 revohitions per minute. With steam supply to the mixer turned on, the polymer and filler components were mixed for 120 sec to 175°C, where the curatives were added and mixing continued for a further 60 sec (to a temperature of 184°C); the oil component was then added and mixing was continued to a total of 420 sec, when the mixture was dumped. The composition of small particles of fully cured chlorobutyl rubber dispersed in an EVA continuous phase, comprised 45 wt % rubber and 55 wt % EVA, with 41 wt % filler and 11 wt % oil based on rubber + EVA. The composition was injection moulded to tube form and subjected to tests, as described in Example 1. The results are reported in Table 1.

## EXAMPLE 3

Composition 3 as set out in Table 1 was prepared by the method and in the apparatus described in Example 2, the only difference being that the temperature when the oil was added after 180 sec mixing was 190°C, not 184°C. The resulting composition of fully cured rubber particles in an EVA matrix comprised 50 wt % rubber and 50 wt % EVA, with 23 wt % filler and 16 wt % oil based on rubber + EVA. The composition was converted to tube form and subjected to tests as described in Example 1, and the results are reported in Table 1.

## EXAMPLE 4

Composition 4 as set out in Table 1 was prepared by dynamic vulcanisation in the mixer described in Example 2. With steam to the mixer turned off, the polymer and filler components were mixed for 230 sec to 153°C, when the curative package was added and mixing continued to 410 sec and 177°C. At this stage half the oil content of the formulation was added, steam to the mixer was turned on, and mixing was continued to 530 sec and 168°C, when the remainder of the oil was added and mixing continued to a total mixing time of 770 sec, when the composition was dumped. The resulting blend of fully cured rubber particles dispersed in an EVA matrix contained 58 wt % rubber and 42 wt % EVA, with 16 wt % filler and 23 wt % oil based on rubber + EVA. The composition was converted to tube form and subjected to tests as described in Example 1, and the results are reported in Table 1.

## EXAMPLE 5

Composition 5 as set out in Table 1 was prepared in the mixer described in Example 2 by the method described in Example 4 except that curative addition was after 180 sec and at 145°C, the first oil addition was after 480 sec (177°C) and the second oil addition was after 590 sec and at 166°C. The resulting blend of fully cured rubber particles dispersed in the EVA matrix comprised 60 wt % rubber and 40 wt % EVA, with 31 wt % filler and 31 wt % oil based on rubber + EVA. The composition was converted to tube form and subjected to tests as described in Example 1, and the results are reported in Table 1.

With reference to the components listed in Table 1 :

(1) CB1066 is a medium molecular weight chlorinated butyl rubber of Exxon Chemical Company having a Mooney (1+8) at 125°C of 38 and containing 1.2 wt % chlorine.

(2) EVA UL00220 is one of the ESCORENE® Ultra range of EVA copolymers of Exxon Chemical Company with VA content 20 wt %, melt index 1.8 g/10 min (ASTM D 1238), density 0.942 g/cm³ (ASTM D 792), shore A hardness 90 (ASTM D 2240), and Vicat softening temperature 60°C (ASTM D 2240), and Vicat softening temperature 60°C (ASTM D 1525).

(3) OMYA® BL is calcium carbonate filler supplied by PLÜSS-STAUFER

(4) Black SRF N 762® is carbon black supplied by Cabot

(5) Flexon® 680 is an ASTM type 103 naphthenic extender oil supplied by Exxon Chemical Company

(6) Parapol® 950 is a low molecular weight polybutene supplied by Exxon Chemical Company

(7) Irganox® 1010 is a hindered phenolic antioxidant (tetrakis (methylene (3,5-di-tert-butyl-4-hydroxyhydrocinnamate) methane) supplied by CIBA-GEIGY

(8) Ultranox® 626 is an antioxidant (Bis (2,4-di-tert-butylphenyl) pentaerythritol disphosphite containing 1.0 % tri isopropanolamine) supplied by Borg-Warner Chemicals Inc.

(9) Maglite® D is magnesium oxide supplied by MERCK

(10) VANAX® PML is the diorthotolylguanidine salt of dicatechol borate supplied by Vanderbilt Inc.

(11) VISTALON® 3777 is an EPDM rubber of Exxon Chemical Company having 66 wt % ethylene, 30 wt % propylene and 4 % ENB; containing 75 phr oil and having a Mooney (1+4) at 125°C = 50

(12) HIMONT® PD 191 is a homopolypropylene supplied by HIMONT with MFR (230°C, 2.16 kg) = 0.5 - 1 g/10 min.

(13) FLEXON® 815 is an ASTM type 104B paraffinic extender oil supplied by Exxon Chemical Company

(14) Treated Talc is a silane coated hydrous magnesium silicate supplied by CYPRUS under the trademark CYPRUBOND®

(15) Bromobutyl 2244 is a brominated butyl rubber of Exxon Chemical having 2 wt % bromine with a Mooney (1+8) at 125°C = 46

(16) Neste® PP 7824 is a polypropylene containing some wt % of ethylene supplied by NESTE, with MFR (230°C, 2.16 kg) = 0.4 g/10 min.

(17) TiO$_2$ RCR2 is titanium oxide supplied by ICI Belgium

(18) Neutral® 600 is the hydrogenated oil of Flexon® 876 which is an ASTM 104B parafinnic extender oil supplied by Exxon Chemical Company

(19) Primol® 352 is a paraffinic white extender oil supplied by Esso

(20) MB SRF 30 % is master batch of black SRF in polypropylene (30 % black) supplied by CABOT

(21) Irganox® 3114 is phenolic antioxidant 1,3,5-tri (3,5-di-tert-butyl-4-hydroxylbenzyl) isocyanurate, supplied by CIBA-GEIGY

(22) Chimasorb® 944 is a hindered amine light stabilizer poly {2-N,N'-di(2,2,6,6-tetramethyl-4-piperidinyl) hexandiamine-4-(1-amino-1,1,3,3-tetramethylbutane)sym-triazine} , supplied by CIBA-GEIGY

(23) Tinuvin® 770 is a hindered amine light stabilizer bis(2,2,6,6-tetramethyl-4-piperidinyl sebacate supplied by CIBA-GEIGY

(24) HVA-2 is m-phenylenedimaleimide supplied by VANDERBILT under the trade name VANAX MBM

(25) Exxon Butyl 268 is a butyl rubber of Exxon Chemical Company with Mooney (1+8) at 125°C = 51

(26) FEF N-550 is black carbon supplied by CABOT

(27) HAF N-330 is black carbon supplied by CABOT

(28) Flexon® 875 is an ASTM type 104 B paraffinic extender oil supplied by Exxon Chemical Company

(29) Caloxol® W 3 is calcium oxide supplied by STURGE

(30) TMTDS is tetramethylthiuram disulfide supplied by VANDERBILT under the trade name METHYL TUADS®

(31) MBT is 2-mercaptobenzothiazole supplied by VANDERBILT under the trade name ROTAX®

(32) ZDEDC is zinc diethyldithiocarbomate supplied by VANDERBILT under the trade name of ETHYL ZIMATE®

By way of comparison, several blends having the formulations shown in Tables 2A, 2B, 2C (Examples 6, 7 and 8) were prepared which did not have the compositions of the containers of the invention. Each was prepared by the dynamic vulcanisation technique in a 30 litre Banbury mixer.

TABLE 2A

| FORMULATION | 6 |
|---|---|
| CHLOROBUTYL 1066 | 16.0 |
| VISTALON 3777 | 47.8 |
| HIMONT PD 191 | 16.0 |
| FLEXON 815 OIL | 10.5 |
| TREATED TALCK | 4.9 |
| MAGLITE D | 0.20 |
| STEARIC ACID | 0.40 |
| BLACK SRF | 2.00 |
| ULTRANOX 626 | 0.20 |
| IRGANOX 1010 | 0.20 |
| ZINC OXIDE | 1.40 |
| VANAX PML | 0.40 |

TABLE 2B

| FORMULATION | 7 |
|---|---|
| BROMOBUTYL 2244 | 37.91 |
| NESTE PP 7824 | 14.45 |
| $TiO_2$ RCR 2 | 13.54 |
| NEUTRAL 600 | 14.45 |
| PRIMOL 352 | 14.45 |
| MAGLITE D | 0.45 |
| STEARIC ACID | 0.45 |
| MB SRF 30 % | 0.01 |
| ULTRANOX 626 | 0.18 |
| IRGANOX 3114 | 0.09 |
| CHIMASORB 944 | 0.23 |
| TINUVIN 770 | 0.18 |
| ZnO | 2.71 |
| HVA-2 | 0.90 |

TABLE 2C

| FORMULATION | 8 |
|---|---|
| EXXON BUTYL 268 | 100 |
| FEF N-550 | 45.4 |
| SRF N-762 | 25 |
| HAF N-330 | -- |
| FLEXON 875 | 15 |
| Zinc Steareate | 1 |
| Zinc Oxide | 10 |
| Caloxol W 3 | 10 |
| Sulfur | 2 |
| TMTDS | 2 |
| MBT | 0.5 |
| ZDEDC | 1 |
| Lead Monoxide | 4 |

The mixing conditions for the blends of Examples 6,7 and 8 were as follows :

EXAMPLE 6 :

Initially the polymer and filler components were loaded into the Banbury at 100°C and mixed for 80 seconds at 140 rpm. At this time the extender oil was added and the blend was heated to a temperature of 180°C over a further 60 seconds. Then the curative package was added and mixing continued at 140 rpm and 180°C until a total of 390 seconds had elapsed from start and the blend had reached 220°C. At this point the blend was dumped at 40 rpm.

EXAMPLE 7

Initially the bromobutyl rubber, polypropylene, $TiO_2$, Maglite D, stearic acid, MB SRF 30%, and antioxidants were introduced into the Banbury at 96 °C; thereafter the mixing sequence to dump was as shown in Table 3.

## TABLE 1

| FORMULATION | 1 | 2 | 3 | 4 | 5 |
|---|---|---|---|---|---|
| CB1066 | 20.2 | 28.2 | 34.2 | 39.8 | 35.3 |
| EVA UL00220 | 34.3 | 34.3 | 34.3 | 29 | 23.4 |
| OMYA BL | 23.8 | 23.8 | 13.8 | - | - |
| BLACK SRF N762 | 2 | 2 | 2 | 11 | 18.3 |
| FLEXON 680 | 15 | 7 | 11 | 7.4 | - |
| PARAPOL 950 | - | - | - | 8.3 | 18.5 |
| IRGANOX 1010 | 0.1 | 0.1 | 0.1 | 0.1 | 0.1 |
| ULTRANOX 626 | 0.2 | 0.2 | 0.2 | 0.2 | 0.2 |
| MAGLITE D | 0.9 | 0.9 | 0.9 | 0.8 | 0.8 |
| STEARIC Ac. | 0.4 | 0.4 | 0.4 | 0.4 | 0.4 |
| ZnO | 2.5 | 2.5 | 2.5 | 2.4 | 2.4 |
| VANAX PML | 0.6 | 0.6 | 0.6 | 0.6 | 0.6 |

| | 1 | 2 | 3 | 4 | 5 |
|---|---|---|---|---|---|
| SHORE A | | | | | |
| INST. | 74 | 78 | 74 | 68 | 67 |
| 5" | 72 | 76 | 71 | 65 | 63 |
| 30" | 70 | 74 | 70 | 63 | 61 |
| MODULUS 100 MPa | 2.3 | 2.8 | 2.5 | 1.6 | 1.5 |
| MODULUS 300 MPa | 3.7 | 4.3 | 5.0 | 4.2 | 4.1 |
| TENSILE MPa | 5.7 | 6.5 | 5.9 | 5.8 | 5.1 |
| ELONGATION % | 488 | 474 | 358 | 397 | 374 |
| COMPRESSION SET | | | | | |
| RT % 70°C % | 23.7 | 26.4 | 23.3 | 19 | 17.2 |
| | 75.3 | 72.1 | 72.8 | 60.7 | 57.8 |
| PERMEABILITY | | | | | |
| COEFFICIENT Q X $10^8$ | 1.24 | 0.72 | 1.17 | 0.60 | 0.63 |
| TEAR N/mm | 28.4 | 34.9 | 29.0 | 23.6 | 21.3 |

TABLE 3

| Time (sec) | Temp (°C) | Ampere | Ingredients | rpm |
|---|---|---|---|---|
| 0 | 96 | 110 | BB/PP/TiO$_2$ | 140 |
|  |  |  | MgO St.Ac./MB/AO |  |
| 75 | 144 | 250 | - | 140 |
| 100 | 167 | 280 | - | 140 |
| 110 | 181 | 260 | - | 100 |
| 120 | 185 | 260 | 1/2 Neutral 600 | 100 |
| 180 | 166 | 60 | - | 140 |
| 230 | 175 | 210 | 1/2 Neutral 600 | 140 |
| 270 | 165 | 50 | - | 140 |
| 315 | 175 | 210 | 1/2 Primol 352 | 140 |
| 360 | 164 | 150 | - | 140 |
| 370 | 175 | 270 | - | 140 |
| 390 | 185 | 270 | Curatives | 100 |
| 640 | 203 | 160-240 | 1/2 Primol 352 | 40-80 |
| 780 | 204 | 160-230 | Dump | 40-80 |

Example 8

Initially the butyl rubber was introduced into Banbury at 90°C; thereafter the mixing sequence to dump was as shown in Table 4.

TABLE 4

| Time (Min) | Temperature (°C) | Ingredients |
|---|---|---|
| 0 | 90°C | Butyl |
| 1 |  | 1/2 Black (FEF or HAF first) Polyac, Zinc Oxide |
| 2.5 |  | 1/4 Black, 1/2 Oil |
| 4 |  | 1/4 Black, 1/2 Oil, Calcium Oxide, Zinc Stearate |
| Dump | 170-180°C |  |

The blends thus prepared were formed into plates and tested by the methods described in Example 1, the results being shown in Table 5.

TABLE 5

|  | EXAMPLE 6 | EXAMPLE 7 | EXAMPLE 8 |
|---|---|---|---|
| SHORE A (5") | 71 | 65 | 55 |
| Modulus 100 MPa | 3.1 | 2.5 | 1.5 |
| Modulus 300 MPa | 5.4 | - | 6.7 |
| Tensile strength MPa | 6.0 | 5.0 | 9 |
| ELONGATION % | 400 | 240 | 410 |
| COMPRESSION SET |  |  |  |
| RT % | 30 | 19 | - |
| 70°C % | 57 | 32 | - |
| PERMEABILITY |  |  |  |
| COEFFICIENT Q X $10^8$ | 3 | 2.6 | 0.6 |
| TEAR N/mm | 35 | 15 | 30 |

As may be seen by reference to the permeability values recorded in Tables 1 and 5, the injection moulded plates prepared from the compositions which contain EVA (Examples 1-5) have considerably better air impermeability than comparison Example 6, which has polypropylene as the matrix phase, and also contains EPDM as a third polymer component intended to provide better physical properties (eg tensile strength, tear strength, elongation). This it does (in comparison with Example 7, the composition of which contains no EPDM), but at the penalty of a higher Q value.

It will of course be noted that the compound formed from straight butyl rubber (Example 8) has a good impermeability; however this blend suffers from the fact that it is not readily spliceable in cured form and therefore is not readily useful in producing containers such as bicycle inner tubes. With regard to Example 8, it is noted that the tubes which are conventionally produced are spliced before vulcanisation. The cost with such compounds is an economic one in that there is a post-splicing cure step and no opportunity to re-use scrap.

Referring to Table 1 alone, it will be observed that the Q value decreases when the proportion of chlorobutyl rubber increases and also when the proportion of oil (plasticizer) decreases.

## Claims

1. A container for superatmospheric pressure air having walls of a thermoplastic elastomeric polymer composition with reduced air permeability, characterized in that the polymer composition comprises from 10 to 80 wt % of a semi-crystalline copolymer (A), having a melt index less than 100g/10 min., of (A1) ethylene and (A2) 6 to 40 wt.% of an alpha-beta unsaturated carboxyl group or ether group containing comonomer, and from 20 to 90 wt % of a vulcanized butyl or halogenated butyl rubber (B) that is a copolymer of an isoolefin and conjugated diolefin, component (B) being in the form of small particles of vulcanized rubber dispersed throughout a continuous phase of component (A).

2. A container according to claim 1, wherein the composition comprises from 45 to 75 wt % (B), based on the total of (A) + (B).

3. A container according to claim 1 wherein, in the composition, component (B) is fully cured in the presence of component (A) by the dynamic vulcanization technique.

4. A container according to claim 1 wherein (B) is chlorobutyl rubber.

5. a container according to claim 1 wherein comonomer (A2) is a vinyl ester, an acrylate, or an acrylic acid.

6. A container according to claim 5 wherein comonomer (A2) is vinyl acetate.

7. A container according to claim 1 wherein (A) contains from 6 to 40 wt % of vinyl acetate as comonomer (A2).

8. a container according to claim 7 wherein (A) contains from 10 to 30 wt % of vinyl acetate.

9. A container according to any of the preceding claims wherein copolymer (A) has a melt index (ASTM D 1238) of less than 100 g/10 min, preferably less than 60 g/10 min.

10. A container according to any of the preceding claims wherein said polymer composition additionally comprises oil (plasticizer) in an amount not greater than 50 parts by weight, preferably not more than 35 parts by weight, based on 100 parts by weight of (A) + (B).

11. A container according to any of the preceding claims, wherein the walls have a permeability coefficient Q of less than $2 \times 10^{-8}$, preferably less than $1.0 \times 10^{-8}$ $cm^3.cm.cm^{-2}.sec^{-1}.atm^{-1}$.

12. A container according to any of the preceding claims when in the form of a vehicle wheel inner tube, preferably a bicycle wheel inner tube.

13. A method of producing a vehicle wheel inner tube which comprises extruding a thermoplastic elastomeric polymer composition, comprising components (A) and (B) as defined in claim 1, in the proportions as defined in claim 1, into an elongate tube of substantially uniform cross section, having opposite ends in the longitudinal direction, bringing the ends together and splicing same to form a continuous hollow ring suitable for containing air under pressure.

14. A method according to claim 13 wherein splicing is achieved by heat welding, by a cold fusion technique such as ultrasonic welding, or by means of an adhesive applied to overlapping surfaces of said opposite ends.

## Patentansprüche

1. Behälter für Luft mit überatmosphärischem Druck, der Wände aus einer thermoplastischen elastomeren Polymerzusammensetzung mit verringerter Luftdurchlässigkeit aufweist, dadurch gekennzeichnet, daß die Polymerzusammensetzung 10 bis 80 Gew.% halbkristallines Copolymer (A) mit einem Schmelzindex kleiner als 100 g/10 min aus (A1) Ethylen und (A2) 6 bis 40 Gew.% α-β-ungesättigtem, Carboxylgruppen oder Ethergruppen enthaltenden Comonomer und 20 bis 90 Gew.% vulkanisierten Butyl- oder Halogenbutylkautschuk (B) umfaßt, der ein Copolymer aus Isoolefin und konjugiertem Diolefin ist, wobei Komponente (B) in Form von kleinen Teilchen aus vulkanisiertem Kautschuk vorliegt, die in einer kontinuierlichen Phase aus Komponente (A) verteilt sind.

2. Behälter nach Anspruch 1, bei dem die Zusammensetzung bezogen auf die Summe von (A)+(B) 45 bis 75 Gew.% (B) umfaßt.

3. Behälter nach Anspruch 1, bei dem in der Zusammensetzung Komponente (B) in Gegenwart von Komponente (A) durch dynamische Vulkanisation vollständig gehärtet worden ist.

4. Behälter nach Anspruch 1, bei dem (B) Chlorbutylkautschuk ist.

5. Behälter nach Anspruch 1, bei dem das Comonomer (A2) ein Vinylester, ein Acrylat oder eine Acrylsäure ist.

6. Behälter nach Anspruch 5, bei dem das Comonomer (A2) Vinylacetat ist.

7. Behälter nach Anspruch 1, bei dem (A) 6 bis 40 Gew.% Vinylacetat als Comonomer (A2) enthält.

8. Behälter nach Anspruch 7, bei dem (A) 10 bis 30 Gew.% Vinylacetat enthält.

9. Behälter nach einem der vorhergehenden Ansprüche, bei dem das Copolymer (A) einen Schmelzindex

EP 0 376 558 B1

(ASTM D 1238) kleiner als 100 g/10 min, vorzugsweise kleiner als 60 g/10 min aufweist.

10. Behälter nach einem der vorhergehenden Ansprüche, bei dem die Polymerzusammensetzung außerdem bezogen auf 100 Gewichtsteile (A)+(B) Öl (Weichmacher) in einer Menge von nicht mehr als 50 Gewichtsteilen, vorzugsweise nicht mehr als 35 Gewichtsteilen umfaßt.

11. Behälter nach einem der vorhergehenden Ansprüche, bei dem die Wände einen Permeabilitätskoeffizienten Q aufweisen, der kleiner als 2 x 10$^{-8}$, vorzugsweise kleiner als 1,0 x 10$^{-8}$ cm$^3$.cm.cm$^{-2}$.s$^{-1}$.atm$^{-1}$ ist.

12. Behälter nach einem der vorhergehenden Ansprüche, in Form eines Fahrzeugradschlauches, vorzugsweise eines Fahrradschlauches.

13. Verfahren zur Herstellung eines Fahrzeugradschlauches, bei dem eine thermoplastische elastomere Polymerzusammensetzung, die die in Anspruch 1 angegebenen Komponenten (A) und (B) in den in Anspruch 1 angegebenen Anteilen enthält, zu einem länglichen Schlauch mit im wesentlichen gleichmäßigem Querschnitt extrudiert wird, der in Längsrichtung gegenüberliegenden Enden aufweist, und die Enden zusammengebracht und verbunden werden, um einen kontinuierlichen Hohlring zu bilden, der zur Aufnahme von Luft unter Druck geeignet ist.

14. Verfahren nach Anspruch 13, bei dem das Verbinden durch Hitzeschweißen, eine Kaltverbindungstechnik wie Ultraschallschweißen oder mittels eines Klebstoffs erreicht wird, der auf überlappenden Oberflächen der einander gegenüberliegenden Enden aufgebracht wird.

## Revendications

1. Récipient destiné à contenir de l'air sous une pression supérieure à la pression atmosphérique, ayant des parois constituées d'une composition polymérique élastomère thermoplastique présentant une perméabilité réduite à l'air, caractérisé en ce que la composition polymérique comprend 10 à 80 % en poids d'un copolymère semi-cristallin (A), ayant un indice de fluidité inférieur à 100 g/10 minutes, constitué (A1) d'éthylène et (A2) de 6 à 40 % en poids d'un comonomère alpha-bêta-insaturé contenant des groupes carboxyle ou des groupes éther, et 20 à 90 % en poids d'un caoutchouc butyle ou butyle halogéné vulcanisé (B), c'est-à-dire un copolymère d'une iso-oléfine et d'une dioléfine conjuguée, le constituant (B) étant sous forme de petites particules de caoutchouc vulcanisé dispersées dans la totalité d'une phase continue de constituant (A).

2. Récipient suivant la revendication 1, dans lequel la composition comprend 45 à 75 % en poids de constituant (B), sur la base du total des constituants (A) + (B).

3. Récipient suivant la revendication 1, dans lequel, dans la composition, le constituant (B) est totalement durci en présence du constituant (A) par la technique de vulcanisation dynamique.

4. Récipient suivant la revendication 1, dans lequel le constituant (B) est un caoutchouc chlorobutyle.

5. Récipient suivant la revendication 1, dans lequel le comonomère (A2) est un ester vinylique, un acrylate ou un acide acrylique.

6. Récipient suivant la revendication 5, dans lequel le comonomère (A2) est l'acétate de vinyle.

7. Récipient suivant la revendication 1, dans lequel le constituant (A) contient 6 à 40 % en poids d'acétate de vinyle comme comonomère (A2).

8. Récipient suivant la revendication 7, dans lequel le constituant (A) contient 10 à 30 % en poids d'acétate de vinyle.

9. Récipient suivant l'une quelconque des revendications précédentes, dans lequel le copolymère (A) possède un indice de fluidité (ASTM D 1238) inférieur à 100 g/10 minutes, de préférence inférieur à 60 g/10 minutes.

16

10. Récipient suivant l'une quelconque des revendications précédentes, dans lequel la composition polymérique comprend en outre une huile (plastifiant) en une quantité non supérieure à 50 parties en poids, de préférence non supérieure à 35 parties en poids, sur la base de 100 parties en poids des constituants (A) + (B).

11. Récipient suivant l'une quelconque des revendications précédentes, dans lequel les parois possèdent un coefficient de perméabilité Q inférieur à $2 \times 10^{-8}$, de préférence inférieur à $1,0 \times 10^{-8}$ $cm^3.cm.cm^{-2}.s^{-1}.atm^{-1}$.

12. Récipient suivant l'une quelconque des revendications précédentes, lorsqu'il est sous forme d'une chambre à air de roue de véhicule, de préférence d'un bandage pneumatique de roue de bicyclette.

13. Procédé de production d'une chambre à air de roue de véhicule, qui comprend l'extrusion d'une composition polymérique élastomère thermoplastique, renfermant les constituants (A) et (B) définis dans la revendication 1 en les proportions définies dans la revendication 1, sous forme d'un tube allongé de section transversale pratiquement uniforme, ayant des extrémités opposées dans la direction longitudinale, la mise en contact des extrémités l'une avec l'autre et le raccordement de ces extrémités pour former un anneau creux continu convenant pour contenir de l'air sous pression.

14. Procédé suivant la revendication 13, dans lequel le raccordement est effectué par thermosoudage, par une technique de fusion à froid telle que le soudage ultrasonique, ou au moyen d'un adhésif appliqué aux surfaces se chevauchant des extrémités opposées.